# EUROPEAN PATENT SPECIFICATION

(11) **EP 4 051 868 B1**
(45) Date of publication and mention of the grant of the patent: **26.07.2023**
(21) Application number: 19870054.4
(22) Date of filing: 28.10.2019
(51) Int. Cl.: E21B 43/34, G01N 33/00, B01D 17/02

(54) **SEPARATION DEVICE AND ASSOCIATED METHOD AND INSTALLATION**
TRENNVORRICHTUNG UND ZUGEHÖRIGES VERFAHREN UND INSTALLATION
DISPOSITIF DE SÉPARATION ET PROCÉDÉ ET INSTALLATION ASSOCIÉS

(43) Date of publication of application: 07.09.2022
(73) Proprietor: TotalEnergies One Tech, 92400 Courbevoie (FR)
(72) Inventor: RUAU, Olivier, 64450 Navailles-angos (FR); MASSOUE, Didier, 64140 Lons (FR); BICKERT, Jacques, 64110 Uzos (FR)
(74) Representative: Lavoix
(86) International application number: PCT/IB2019/001210
(87) International publication number: WO 2021/084290

(56) References cited:
- EP-A1- 3 168 242
- WO-A2-2012/154971
- CN-B- 104 806 223
- US-A- 4 616 700
- US-A1- 2019 154 864
- US-A1- 2019 211 662

## Description

The present invention concerns a separation device for extracting a sample from a fluid flow comprising at least three phases including at least a phase of interest to be sampled. The invention also concerns a corresponding separation method, and an installation for producing a fluid, comprising the aforementioned separation device.

Separation devices are commonly used in the oilfield industry, on fluid production installations. In such a production installation, the produced fluid is extracted from at least one well and usually comprises a mix of oil, water and gas.

It is frequent for a single production well to cross several reservoirs containing different kinds of oil, fluid being then extracted from all the reservoirs simultaneously. In order to monitor the depletion of each of the produced reservoirs, there is a need to identify the relative proportion of fluid extracted from each reservoir in the produced flow.

There are several methods for analyzing an oil sample in order to determine the respective proportions of fluid from each reservoir in the sample, usually by comparing one or more of its characteristic features with the corresponding features of purified oil samples from each reservoir. Such a method is referred to as allocation.

The fluid produced at the wellhead generally comprises at least three different phases, including gas, water and oil. In order to improve the accuracy of the analysis, the fluid is usually purified through a sampler module, in order to obtain a sample containing a higher proportion of oil and lower proportions of gas and water.

In order to improve the accuracy of the allocation, it is desired to have samples containing a relative proportion of oil as high as possible, and as little water as possible to reduce parasite signal. It is thus highly desirable to improve the purification of the samples prior to measuring.

Furthermore, in order to maintain a high efficiency and to minimize well immobilization, such measurements are made on site, in a continuous manner. This requires that all devices be compatible for use in an explosive atmosphere environment. For example, the equipment must be contained in a sealed enclosure and controlled pneumatically, as any electronic component must be far removed from the wellhead.

US 4616700 A2 describes an automatic well test system and method.

WO 2012/154971 A2 describes a method and system for metering liquid production at a well.

US 2019/211662 A1 describes a controlled high pressure separator for production fluids.

One aim of the invention is thus to provide a separation device able to extract a sample comprising at least a predetermined proportion of a single phase from a multiphase flow, able to safely operate close to a wellhead, and allowing for a fast and reliable obtaining of purified fluid samples for further analysis.

To this aim, the subject-matter of the invention is a separation device according to claim 1.

The separation device according to the invention may comprise one or more of the features of claims 2 to 9.

The invention also concerns an installation for producing a fluid according to claim 10.

The installation according to the invention may comprise one or more of the features of claims 11 to 13.

The invention further concerns a method according to claim 14.

The method according to the invention may comprise one or more of the features of claims 15 or 16.

The invention will be better understood upon reading the following description, which is given only as an example, and made in reference to the joined drawings, among which:
- figure 1 is a cross sectional view of an oil production installation according to the invention,
- figure 2 and 3 are cross sectional views of the separation device according to the invention,
- figure 4 is a cross sectional view of a variant of the separation device of figures 2 and 3,
- figure 5 is a cross sectional view of another variant of the separation device of figures 2 and 3.

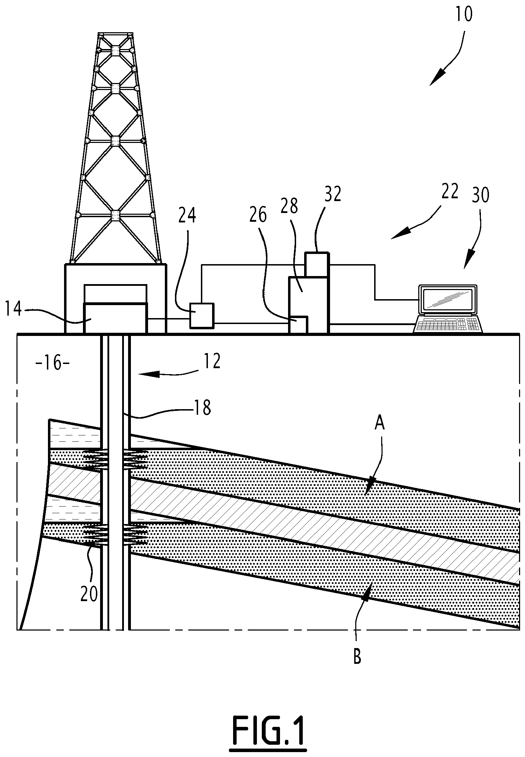

An installation 10 for producing a fluid is represented on figure 1. The fluid is produced from a plurality of different sources, each source producing a differentiable fluid from the other sources.

The installation 10 is for example an installation for producing oil and gas, comprising a well 12 and a wellhead 14 at the top of the well 12, the sources being a plurality of reservoirs from which fluid is produced.

The well 12 advantageously comprises a casing 18 placed in a hole extending through the ground 16. The hole crosses the plurality of reservoirs A, B containing the fluid, including hydrocarbons in liquid and gas form, as well as water and other fluids, trapped in rock formations.

The fluid produced from each reservoir A, B is different from the fluid produced from the other reservoirs A, B, notably having different proportions of varied hydrocarbons or other chemical species. Hence, produced fluids exhibit a different chemical signature depending on which reservoir A, B they are produced from.

The well 12 extends sensibly vertically at least in an upper portion. In a non-represented variant, the well 12 further may comprises a deviated lower portion extending at an angle with the vertical upper portion, the angle being comprised between 0° and up to 90° for a horizontal well.

The well 12 comprises several transverse perforations 20 extending from the casing 18 through the reservoirs A, B, destined to allow fluid from the reservoirs A, B to flow through the rock into the casing 18 and up to the wellhead 14. The fluid produced at the wellhead 14 comprises at least one phase, including in particular a water phase, an oil phase and a gas phase.

In some embodiments, the produced fluid comprises only a water phase, only an oil phase or only a gas phase, or only two phases chosen from the above.

In other embodiments, the fluid may also comprise a solid phase, for example sand or sediments. In those cases, the wellhead 14 comprises a filtering assembly, suitable for removing the solid phase from the produced fluid flow.

In the cases when the produced fluid comprises several phases, at least two of the phases are sensibly immiscible with one another.

By sensibly immiscible, it is meant that the miscibility coefficient of the phases is for example lower than 5% at 25°C and under 1013 hPa.

A fluid analysis system 22 is fluidically connected to the wellhead 14, and able to extract samples of the produced fluid for analysis, in a continuous manner and without altering the production process.

The fluid analysis system 22 is configured to analyze samples from the fluid produced at the wellhead 14 to determine a relative proportion of fluid extracted from each reservoir A, B among the produced fluid. More specifically, the fluid analysis system 22 is configured to prepare and analyze samples comprising a high proportion of a phase of interest comprised among the phases of the produced fluid, in particular the oil phase.

For example, the fluid analysis system 22 is configured to extract samples comprising at least 80% of oil in volume, advantageously at least 90% of oil in volume, from the produced fluid, which may originally comprise any proportion of each of the phases.

The fluid analysis system 22 comprises a sampler module 24, a separation device 26, an analysis module 28, a control module 30 and a pneumatic interface 32.

The sampler module 24 is configured to extract fluid samples from the fluid produced at the wellhead 14, and to remove at least a part of each phase other than the phase of interest from each fluid sample. The detailed features of the sampler module 24 are known to the person skilled in the art and thus are not discussed in details hereinafter. Examples of sampler modules for multi-phasic fluids are sold by Typhonix and Expro, among others.

The sampler module 24 has an outlet fluidically connected to the separation device 26, which conveys the fluid samples for further improvement of the concentration in the phase of interest.

Advantageously, the sampler module 24 is fully pneumatically controlled by the control module 30 through the pneumatic interface 32. The sampler module 24 is thus devoid of electrically controlled components, and is contained in an enclosure suitable for use in an explosive atmosphere environment, so that the sampler module 24 can be located close to the wellhead 14 with reduced risk.

The separation device 26 is configured to extract samples from the flow exiting the sampler 24, with an increased relative proportion of the phase of interest, in order to improve the accuracy of the analysis performed by the analysis module 28.

The separation device 26 is advantageously contained in a portable enclosure, notably together with the analysis module 28, in which a neutral gas flow circulates, for example a nitrogen flow. The nitrogen flow prevents combustion and makes the separation device 26 and analysis device 28 usable in an explosive atmosphere, like close to a wellhead.

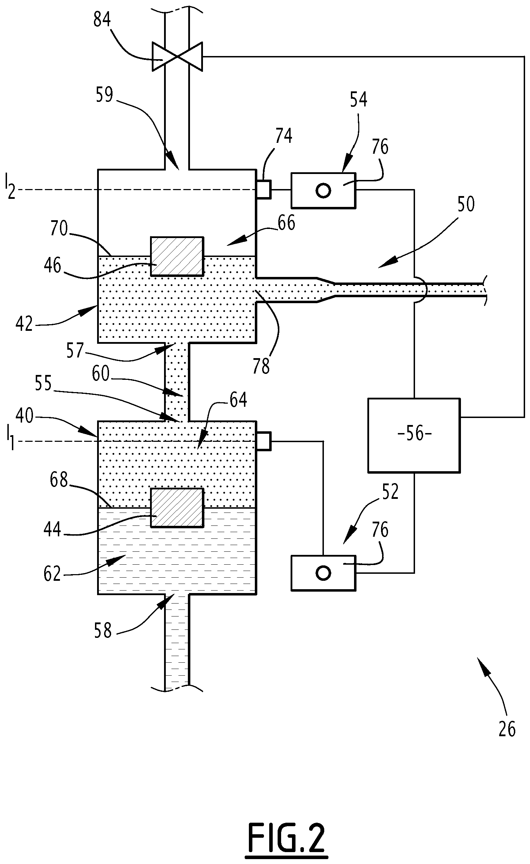

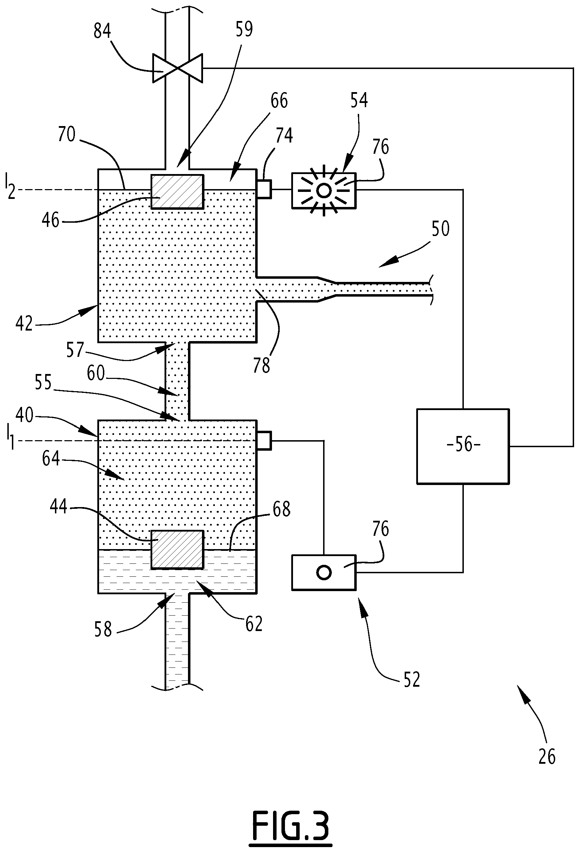

The separation device 26 is shown in details on figures 2 and 3. The separation device 26 comprises a chamber assembly configured to receive the fluid exiting the sampler module 24, as well as a first diver 44 and a second diver 46.

The chamber assembly may comprise a single chamber, or a plurality of chambers fluidically connected to each other in succession.

In the embodiments shown on figures 2 to 4, the chamber assembly comprises a first chamber 40 and a second chamber 42, the first diver 44 and the second diver 46 being respectively located in the first chamber 40 and in the second chamber 42.

The separation device 26 further comprises an extraction device 50 configured to extract the fluid contained in the chamber assembly to form a sample, as well as a first sensor 52, a second sensor 54 and a control device 56. The extraction device 50 is also configured to convey the extracted sample towards the analysis module 28 to implement the analysis.

The first chamber 40 comprises an inlet 58 fluidically connected to the sampler module 24, through which the fluid enters the first chamber 40, and an outlet 55 opening in the first chamber 40 preferably opposite the inlet 58.

The second chamber presents an inlet 57 opening in the second chamber 42 and an outlet 59 opposite the inlet 57, through which the fluid exits the second chamber 42. The outlet 55 of the first chamber 40 and the inlet 57 of the second chamber 42 are fluidically connected to each other through a conduit 60.

The fist chamber 40 and the second chamber 42 are for example sensibly cylindrical in shape, with the inlet 58 and the outlet 55 of the first chamber 40, as well as the inlet 57 and the outlet 59 of the second chamber 42 sensibly aligned on their respective axis. The fist chamber 40 and the second chamber 42 may have in particular identical height and diameter, and the conduit 60 has a diameter preferentially smaller than the diameter of the first chamber 40 and the second chamber 42.

Advantageously, the inlets 57, 58, the outlets 55, 59 and the conduit 60 are aligned on a single vertical axis, so that the different phases are arranged in the first chamber 40 and second chamber 42 relatively to their respective densities, with denser phases closer to the inlet 58 of the first chamber 40 and lighter phases closer to the outlet 59 of the second chamber 42.

In a variant, the inlet 58 opens in the top wall of the chamber assembly, or in a side wall.

In another variant, the inlets 57, 58 and outlets 55, 59 are not aligned. This is particularly relevant if the conduit 60 is flexible and the first chamber 40 and second chamber 42 are separate, or even remote from each other.

As shown on figures 2 and 3, the first chamber 40 and the second chamber 42 receive the multi-phase fluid from the sampler module 24. The fluid received in the first chamber 40 and in the second chamber 42 comprises at least a first phase 62, for example a water phase, a second phase 64, for example an oil phase, and a third phase 66, for example a gas phase.

The three phases present different respective densities, with the first phase being the densest and the third phase the least dense. The three phases are arranged in the first chamber 40 and second chamber 42 relative to each other with respect to their relative densities, with a first interface 68 separating the first phase 62 and the second phase 64, and a second interface 70 separating the second phase 64 and the third phase 66.

The first diver 44 is located in the first chamber 40. The first diver 44 presents a first density greater that the density of the phase of interest, so that the first diver 44 sinks when placed in the phase of interest.

The first density is smaller than the density of at least one of the phases of the multi-phase fluid apart from the phase of interest.

For example, when the multi-phase fluid comprises the first phase 62, the second phase 64 and the third phase 66, the second phase 64 being the phase of interest, the first density of the first diver 44 is smaller than the density of the first phase 62 and greater than the respective densities of the second phase 64 and the third phase 66. This way, the first diver 44 float on the first phase 62 and sinks in the second and/or third phase 64, 66, so that the first diver 44 follows the first interface 68.

The second diver 46 is located in the second chamber 42. The second diver 46 presents a second density smaller that the density of the phase of interest, so that the second diver 46 floats when placed in the phase of interest.

The second density is greater than the density of at least one of the phases of the multi-phase fluid apart from the phase of interest.

For example, when the multi-phase fluid comprises the first phase 62, the second phase 64 and the third phase 66, the second phase 64 being the phase of interest, the second density of the second diver 46 is smaller than the respective densities of the first phase 62 and the second phase 64 and greater than the density of the third phase 66. This way, the second diver 46 floats on the first phase 62 and/or the second phase 64 and sinks in the third phase 66, so that the second diver 46 follows the second interface 70.

Notably, the first diver 44 is denser than oil but less dense than water and the second diver 46 is denser than gas but less dense than oil, so that the first diver 44 and the second diver 46 follow the interfaces of the oil phase in a three-phase fluid.

The first diver 44 and the second diver 46 are for example substantially cylindrical in shape, with diameters smaller than the diameters of the first chamber 40 and second chamber 42, so as to not block the fluid flow, and greater than the diameters of the inlet 58, outlet 59 and conduit 60, so as to remain in their respective chamber 40, 42.

The fluid circulates in the first chamber 40 and in the second chamber 42 under an injection pressure resulting from the pressure differential between the fluid exiting the wellhead 14 and the atmospheric pressure.

The fluid enters the chamber assembly with a pressure lower than the pressure at the wellhead by 3 to 4 bar, but sufficient for circulation the fluid through the chamber assembly.

The injection pressure is for example greater than 6 bar and advantageously comprised between 20 bar and 60 bar relative to the atmospheric pressure. This ensures that the volume occupied by gaseous phases of the fluid remains low.

Advantageously, the chamber assembly comprises a pressure sensor (not represented), configured to measure a pressure in the first chamber 40 and/or in the second chamber 42. The pressure sensor allows checking the presence of pressurized gas in the chamber assembly.

The first sensor 52 and the second sensor 54 are respectively arranged in the first chamber 40 and in the second chamber 42.

The first sensor 52 is configured to detect the first diver 44 reaching a predetermined first level l₁ in the first chamber 40, and the second sensor 54 is configured to detect the second diver 46 reaching a predetermined second level l₂ in the second chamber 42.

The first level l₁ is predetermined close to the outlet 55, in an upper part of the first chamber 40, while the second level l₂ is predetermined close to the outlet 59, in an upper part of the second chamber 42.

In the example of figures 2 and 3, the first sensor 52 and the second sensor 54 comprise each a magnetic sensor 74, disposed at the first outlet 55 and second outlet 59 respectively. In this case, the first diver 44 and the second diver 46 each comprise at least a magnetic part, able to be detected by the magnetic sensors 74 without requiring direct contact. For example, the magnetic sensor is configured to detect a magnetic field perturbation caused by proximity of the first diver 44 or second diver 46.

The first sensor 52 and the second sensor 54 also comprise signaling modules 76 connected to their respective magnetic sensor 74 and configured to signal proximity between the first diver 44 or second diver 46 respectively and the magnetic sensor 74. The first level l₁ and the second level l₂ thus respectively correspond to the position in which the first diver 44 and the second diver 46 are in proximity with the respective magnetic sensors 74, as visible on figure 3.

By "in proximity", it is meant that the distance between the first diver 44 or second diver 46 and the magnetic sensor 74 is low enough to allow detection without error. For example, such a distance is lower than 2 mm.

The first diver 44 reaching the first level l₁ is representative of the second chamber 42 containing only phases 64 and/or 66 of the fluid that are less dense than the first diver 44.

Notably, the first diver 44 reaching the first level l₁ signals that the interface separating the water phase 62 and the oil phase 64 has reached the first level l₁, the first chamber 40 containing the water phase. As long as the first diver 44 does not reach the first level l₁, the second chamber 42 thus contains mostly the oil phase 64 and the gas phase 66, or only the gas phase or the oil phase.

Thus, the first diver 44 not being detected by the first sensor 52 signifies that the second chamber 42 contains the oil phase 64 and eventually the gas phase 66.

The second diver 46 reaching the second level l₂ is representative of the first chamber 40 and second chamber 42 containing only phases 62 and/or 64 of the fluid that are denser than the second diver 46.

Notably, the second diver 46 reaching the second level l₂ signals that the interface separating the oil phase 64 and the gas phase 66 has reached the second level l₂, the first chamber 40 and second chamber 42 containing mostly the water phase 62 and the oil phase 64, or only the water phase or the oil phase.

Thus, the first diver 44 not reaching the first level l₁ and the second diver 46 simultaneously reaching the second level l₂ signals that the second chamber 42 mostly contains phases whose densities are comprised between the first density and the second density.

In the example of the three-phase fluid, this means that the second chamber 42 mostly contain the oil phase, which is desired to obtain a purified oil sample.

Advantageously, the first level l₁ and the second level l₂ are adjustable in the first chamber 40 and in the second chamber 42 respectively.

For example, the magnetic sensors 74 are movable along the walls of the first chamber 40 and the second chamber 42 respectively, so as to modify the positions detection of the first diver 44 and second diver 46 respectively.

Adjusting the first level l₁ varies the proportion of denser phases that are considered admissible in a purified sample, while adjusting the second level l₂ varies the admissible proportion of lighter phases.

Typically, in a three-phase fluid comprising water oil and gas, a moderate proportion, for example 5% in volume, of gas phase is admissible without sensibly affecting the measurement process, while the water phase proportion has to be kept minimal. The first level l₁ can thus advantageously be kept close to the outlet 55, while the second level l₂ can be slightly lowered to speed up the sample separation process.

The extraction device 50 is configured to extract the fluid contained in the first chamber 40 and/or in the second chamber 42 on command. The extraction device 50 comprises an extraction port 78 opening in the first chamber 40 or in the second chamber 42 or in the conduit 60 and an, an outlet valve 84 fitted to outlet 59.

The extraction port 78 may present an inner diameter lower than an inner diameter of the outlet 59, for example twice lower. Thus, the fluid flows preferentially through the outlet 59 when the outlet valve 84 is open, and is only redirected through the extraction port 78 when the outlet valve 84 is closed.

The outlet valve 84 is advantageously a pneumatically controlled valve.

The control device 56 is configured to receive signals from the first sensor 52 and from the second sensor 54 and to pilot the extraction device 50.

The control device 56 is programmed to trigger the extraction of a sample when the first diver 44 and the second diver 46 occupy predetermined positions relative to the first level l₁ and the second level l₂ respectively. For example, when the first level l₁ is located in the upper part of the first chamber 40 and the second level l₂ is located in the upper part of the second chamber 42, the predetermined position of the first diver 44 is within proximity of the first level l₁, and the predetermined position of the second diver 46 is away from proximity of the second level l₂, as described above. This corresponds to the detection of the first diver 44 reaching the first level l₁ by the first sensor 52, while the second diver does not reach the second level l₂ and is thus not detected by the second sensor 54.

In a variant, the first level l₁ is located in a lower part of the first chamber 40. The predetermined positions of the first diver 44 and second diver 46 are within proximity of the first level l₁ and second level l₂ respectively. This corresponds to detection of the first diver 44 and the second diver 46 simultaneously reaching the first level l₁ and the second level l₂ respectively.

The control device 56 advantageously comprises a pneumatic control module and is adapted to pilot the outlet valve 84 pneumatically. This decreases the risk of a spark close to flammable fluids and improves the safety of the device.

The control device 56 is programmed to extract the sample by shutting the outlet valve 84 to redirect the fluid circulating in the first chamber 40 and in the second chamber 42 through the extraction port 78, to form a sample.

The sample is further enriched in the phase of interest compared to the fluid exiting the sampler module 24.

The analysis module 28 is configured to analyze the sample extracted by the extraction device 50, in order to determine a relative proportion of fluid extracted from each reservoir A, B among the produced fluid. To that end, the analysis module implements a measurement on the sample enriched in the phase of interest, and compares the measurement results to data obtained from pure samples obtained from each of the reservoirs A, B. For example, the implemented measurement is gel permeation chromatography coupled to an ultraviolet light analysis (shortened to GPC-UV).

The control module 30 is configured to control the sampler module 24, the separation device 26 and the analysis module 28, through a direct electronic connection or through the pneumatic interface 32.

The pneumatic interface 32 is electronically connected to the control module 30 and is configured to convert electronic commands destined to the sampler module 24 into pneumatic commands that can be safely transmitted to the sampler module 24 located in the explosive atmosphere area close to the wellhead 14.

A method for separating at least one sample from a fluid flow will now be described, implementing the separation device described above.

The fluid comprises at least three phases including a phase of interest to be sampled, as described above.

The method comprising a step of filling the first chamber 40 and the second chamber 42 with fluid from the fluid flow.

The fluid is injected in the chamber assembly, notably from the fluid flow obtained from the sampler device 24.

The first diver 44 and the second diver 46 move in the chamber assembly, respectively following the first interface 68 and the second interface 70, without interfering with each other.

If the second sensor 54 detects the second diver 46 reaching the second level l₂ and if the first sensor 52 does not simultaneously detect the first diver 44 reaching the first level l₁, the method comprises a step of extracting the fluid from the first chamber 40 and/or from the second chamber 42 and/or from the conduit 60 with the sample extraction device 50, to obtain a fluid sample.

If the second sensor 54 does not detect the second diver 46 reaching the second level l₂ and/or if the first sensor 52 detects the first diver 44 reaching the first level l₁, the method comprises a step of purging the fluids from the first chamber 40 and the second chamber 42. The fluid circulates through for instance the outlet 59 and is sent to a container tank for further processing, for example to be passed through the sampler module 24 one more time.

The first chamber 40 and the second chamber 42 are then refilled with fluid, and the method can be repeated until the desired number of purified samples have been obtained.

In some embodiments, the method comprises a preliminary step of adjusting the first level l₁ and the second level l₂, notably by moving magnetic sensors 72 along side walls of the chamber assembly.

The described separation device and process allows extracting a sample comprising at least a predetermined proportion of a single phase from a multiphase fluid in a fast and reliable manner, for further analysis.

The extracted sample are enriched in the phase of interest, usually the oil phase, which allows for more accurate allocation measurement in an oil and gas production installation.

The extraction and measurements can be made on site, in a continuous manner, to maintain a high efficiency and to minimize well immobilization.

Furthermore, the sampling module 24 and the extraction device are compatible for use in an explosive atmosphere environment, close to the wellhead.

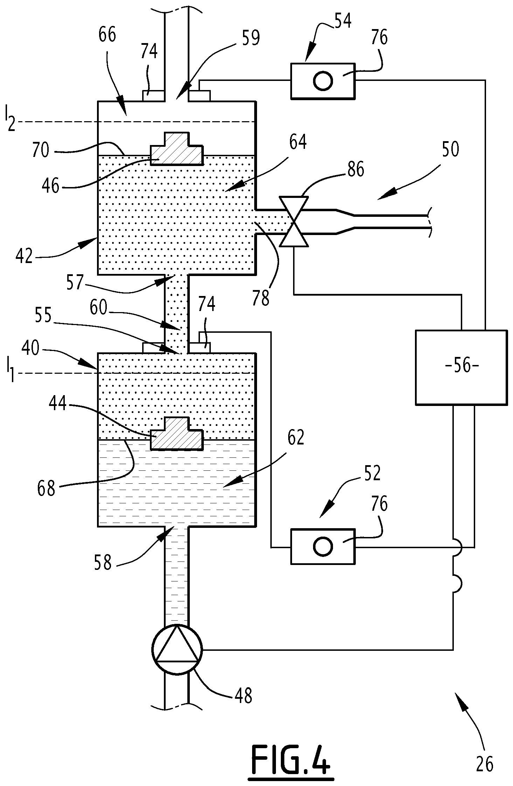

In a variant represented on figure 4, the first diver 44 is configured to seal the outlet 55 of the first chamber 40 when it reaches the first level l₁, and the second diver 46 is configured to seal the outlet 59 of the second chamber when it reaches the second level l₂. For example, the first diver 44 presents a shape complementary to the outlet 55 while the second diver 46 presents a shape complementary to the outlet 59.

In this variant, the outlet valve 84 is not necessary, the closing of the outlet 59 being obtained through the second diver 46.

In this variant, in the extraction method, the first diver 44 reaching the first level l₁ comprises a sealing of the outlet 55 by the first diver 44 and the second diver 46 reaching the second level l₂ comprises a sealing of the outlet 59 by the second diver 46.

In a variant, the separation device 26 further comprises a purging system, configured to inject pressurized gas, notably a neutral gas (like nitrogen) in the chamber assembly during extraction of the sample.

In a variant also represented on figure 4, the first sensor 52 and the second sensor 54 comprise magnetic contact sensors arranged to detect the contact between the outlet 55 and the first diver 44 and between the outlet 59 and the second diver 46 respectively. The first level l₁ and the second level l₂ are thus positioned in a close proximity to the outlet 55 and to the outlet 59 respectively.

Other types of sensors can be envisioned, including optical sensors, mechanical sensors, and piezoelectric sensors, among others.

In a variant also represented on figure 4, the separation device 26 comprises an injection pump 48, fluidically connected to the inlet 58. The injection pump 48 is controlled by the control device 56 and configured to inject the multi-phase fluid through the inlet 58 under a controlled injection pressure and to circulate the fluid through the chamber assembly.

In another variant represented on figure 4, the extraction device 50 comprises an extraction valve 86 fitted to the extraction port 78. The extraction valve 86 is advantageously a pneumatically controlled valve, and is piloted by the control module 56. The extraction valve 86 is closed during circulation of the fluid through the chamber assembly, and opened by the control device 56 to extract a sample, simultaneously to the closing of the outlet valve 84. The extraction valve 86 may be used as an alternative to the difference in inner diameter between the outlet 59 and the extraction port 78.

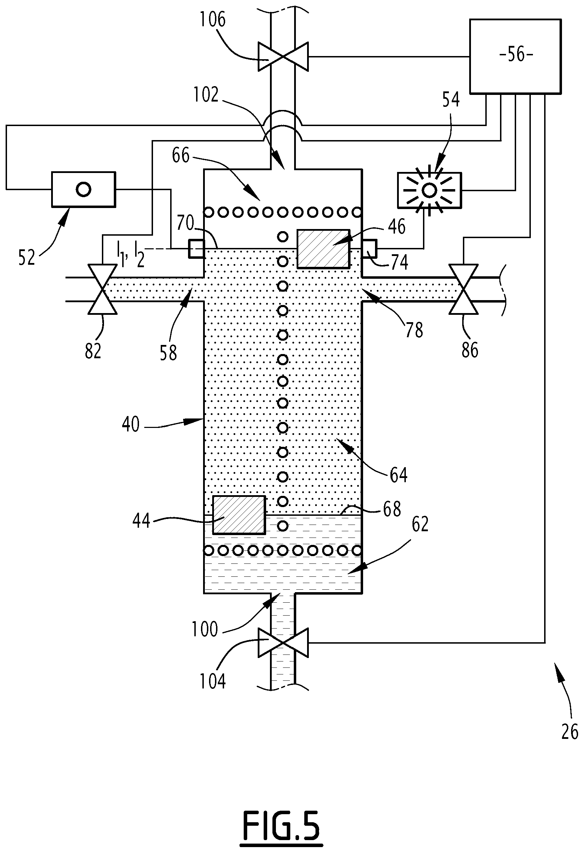

In another embodiment of the separation device 26 shown on figure 5, the chamber assembly comprises a single chamber 40 receiving both the first diver 44 and the second diver 46. The first diver 44 and the second diver 46 are arranged in the chamber assembly to not cross or interfere with one another or disturb the fluid flowing through the chamber assembly.

For example, the divers 44, 46 are located in respective separate cages extending along two side walls of the chamber 40, as shown on figure 5. This allows for the divers 44, 46 to move alongside each other without interfering with each other or blocking the fluid flow.

In another variant, the divers 44, 46 are mounted sliding on respective rails or in compartments extending through the chamber 40.

In the embodiment shown on figure 5, the single chamber 40 has an inlet 58 and an extraction port 78, each opening in a respective side wall of the chamber 40, along a sensibly horizontal direction. The inlet 58 and the extraction port 78 are respectively fitted with an inlet valve 82 and an extraction valve 86.

The chamber 40 also has a water outlet 100 and a gas outlet 102, fitted with respectively a water outlet valve 104 and a gas outlet valve 106. The water outlet 100 opens in the bottom of the chamber 40 and the gas outlet 102 in the top of the chamber 40, so that they are facing the water phase 62 and the gas phase 66 in the chamber 40 respectively.

The four valves 82, 86, 104, 106 are controlled by the command module 56, similarly as described above.

In a variant of the embodiment represented on figure 5, each of the outlets 78, 100, 102 is fitted with a respective independent extraction pump. This allows for sampling each of the phases independently. When combined with the divers 44, 46 configured to seal the outlets 100, 102, as represented on figure 4, this allows for improved accuracy when sampling the different phases.

In another non-represented variant, the chamber assembly comprises three or more successive chambers through which the fluid circulates.

In another non-represented variant, the extraction device 50 comprises an extraction pump, arranged to extract the fluid contained in the chamber assembly through the extraction port 78.

In another variant, the valves 82, 84, 86, 104, 106 are safety electric valves, able to be safely operated in an explosive atmosphere environment, instead of pneumatically controlled valves.

In another variant, the separation device 24 comprises three or more sensors, configured to detect the presence of the divers 44, 46 on at least three different levels in the chamber assembly. In this variant, the chamber assembly comprises several extraction ports, opening between the different levels. This variant allows for sampling different phases in a multiphasic flow, and/or gather samples from interfacial regions separating the phases.

In another variant, the enclosure containing the separation device 26 and the analysis device 28 is airtight and suitable for safe use in an explosive atmosphere environment, such as close to a wellhead.

All the variants and embodiments of the separation device described above may be freely combined, as far as they are technically compatible, with the person skilled in the art being able to implement any necessary adjustment.

## Claims

1. - A separation device (26) for extracting at least one sample from a fluid flow comprising at least two phases, preferably three phases (62, 64, 66), including at least one phase of interest (64) to be sampled, the separation device (26) comprising :
- a chamber assembly having an inlet (58) and an outlet (59),
- a sample extraction device (50) comprising an extraction port (78) opening in the chamber assembly,
- a first diver (44) and a second diver (46), respectively located in the chamber assembly and respectively having a first density and a second density, the first density being greater than or equal to a density of the phase of interest (64) and the second density being smaller than or equal to the density of the phase of interest (64),
- a first sensor (52) arranged in the chamber assembly , configured to detect the first diver (44) reaching a predetermined first level (l₁) in the chamber assembly , and
- a second sensor (54) arranged in the chamber assembly , configured to detect the second diver (46) reaching a predetermined second level (l₂) in the chamber assembly,
the sample extraction device (50) having a control device (56) configured to extract the sample from the chamber assembly when the first diver (44) and the second diver (46) occupy predetermined positions relative to the first level (l₁) and the second level (l₂) respectively.

2. - The separation device (26) according to claim 1, wherein the first sensor (52) and the second sensor (54) comprise magnetic proximity sensors (72) arranged in or on the chamber assembly,
the magnetic sensors (72) being movable along the chamber assembly, so as to respectively modify the first level (l₁) and/or the second level (l₂).

3. - The separation device (26) according to claim 1 or 2, wherein the chamber assembly comprises a first chamber (40) having the inlet (58) and an outlet (55), and a second chamber (42) having an inlet (57) and the outlet (59), the outlet (55) of the first chamber (40) being fluidically connected to the inlet (56) of the second chamber (42).

4. - The separation device (26) according to claim 3, wherein the separation device (26) comprises an injection pump (48) arranged to circulate the fluid through the first chamber (40) and the second chamber (42), the fluid being pressurized with an injection pressure greater than 6 bar and advantageously comprised between 20 bar and 100 bar relative to atmospheric pressure.

5. The separation device according to claim 3 or 4, wherein the inlet (58) and the outlet (55) of the first chamber (40) are substantially aligned along a vertical direction relative to gravity, and the inlet (57) and the outlet (59) of the second chamber (42) are substantially aligned along the vertical direction.

6. - The separation device (26) according to any one of claims 3 to 5, wherein the first diver (44) is configured to seal the outlet (55) of the first chamber (40) when it reaches the first level (l₁), and the second diver (46) is configured to seal the outlet (59) of the second chamber (42) when it reaches the second level (l₂).

7. - The separation device (26) according to any one of claims 3 to 6, wherein the inlet (58) of the first chamber (40) is fitted with an inlet valve (82) and/or the outlet (59) of the second chamber is fitted with an outlet valve (84) and/or the extraction port (78) is fitted with a sampling valve (86),
the inlet valve (82), the outlet valve (84) and the sampling valve (86) being pneumatically controlled valves or safety electric valves.

8. - The separation device (26) according to any one of claims 1 to 7, wherein the separation device (26) is configured to be fluidically connected to a sampler module (24), the sampler module (24) being configured to remove at least a part of each phase (62, 66) other than the phase of interest (64) from the fluid entering separation device (26).

9. - The separation device (26) according to claim 1 or 2, wherein the chamber assembly comprises a single chamber (40), the first diver (44) and the second diver (46) being both contained in the chamber (40) and being arranged to move in the chamber (40) without interfering with each other.

10. - An installation (10) for producing a fluid, comprising :
- a fluid production system (12, 14), arranged to produce a fluid from a plurality of sources (A, B), the fluid comprising at least three phases (62, 64, 66) including a phase of interest (64),
- a separation device (26) according to any one of claims 1 to 9, configured to extract samples of the fluid from the production system (12, 14), and
- an analyzer module (28) connected to the sample separation device (26) and configured to analyze the samples of fluid to deduce a proportion of fluid extracted from each source (A, B) in each sample.

11. - The installation (10) according to claim 10, wherein the installation (10) further comprises a sampler module (24) fluidically connected to the fluid production system (12) and to the separation device (26), the sampler module (24) being configured to remove at least a part of each phase (62, 66) other than the phase of interest (64) from the fluid entering the separation device (26).

12. - The installation (10) according to claim 10 or 11, wherein the fluid production system (12, 14) comprises an oil and gas production well (12) and the plurality of sources (A, B) is a plurality of reservoirs, the produced fluid comprising a water phase (62), a gas phase (66) and an oil phase (64), the oil phase (64) being the phase of interest.

13. - The installation (10) according to any one of claims 10 to 12, wherein the analyzer module (28) comprises a gel permeation chromatograph coupled with a ultraviolet light detector.

14. - A method for separating at least one sample from a fluid flow comprising at least three phases (62, 64, 66) including a phase of interest (64) to be sampled, the method comprising the steps of:
(a) providing a separation device (26) according to any one of the claims 1 to 9,
(b) filling the chamber assembly with fluid from the fluid flow,
(c) when the first sensor (52) and second sensor (54) indicate the first diver (44) and second diver (46) simultaneously occupying the predetermined positions relative to the first level l₁ and second level l₂ respectively, extracting the fluid from the chamber assembly with the sample extraction device (50), to obtain a fluid sample,
(d) when the first diver (44) and/or the second diver (46) do not occupy their respective predetermined positions, purging the fluid from the chamber assembly, and
(e) repeating steps (b) to (d) until a sufficient number of samples have been extracted.

15. - The method according to claim 14, wherein the chamber assembly comprises a first chamber (40) containing the first diver (44) and a second chamber (42) containing the second diver (46), the method comprising sealing the outlet (55) of the first chamber (40) by the first diver (44) when the first diver (44) reaches the first level (l₁) and the method comprising sealing the outlet (59) of the second chamber (42) by the second diver (46) when the second diver (46) reaches the second level (l₂).

16. - The method according to claim 14, wherein the chamber assembly comprises a single chamber (40) containing both the first diver (44) and the second diver (46), the first diver (44) and the second diver (46) moving separately in the chamber (40) without interfering with each other.

## Patentansprüche

1. Trennvorrichtung (26) zum Extrahieren mindestens einer Probe aus einem Fluidstrom, umfassend mindestens zwei, vorzugsweise drei Phasen (62, 64, 66), die mindestens eine Phase von Interesse (64) beinhalten, von der eine Probe genommen werden soll, die Trennvorrichtung (26) umfassend:
- eine Kammeranordnung, die einen Einlass (58) und einen Auslass (59) aufweist,
- eine Probenentnahmevorrichtung (50), umfassend eine Entnahmeöffnung (78), die in die Kammeranordnung öffnet,
- einen ersten Taucher (44) und einen zweiten Taucher (46), die sich jeweils in der Kammeranordnung befinden und jeweils eine erste Dichte und eine zweite Dichte aufweisen, wobei die erste Dichte größer ist als oder gleich einer Dichte der Phase von Interesse (64) und die zweite Dichte kleiner als oder gleich wie Dichte der Phase von Interesse (64) ist,
- einen ersten Sensor (52), der in der Kammeranordnung angeordnet ist und konfiguriert ist, um zu erkennen, wenn der erste Taucher (44) ein vorbestimmtes erstes Niveau (l₁) in der Kammeranordnung erreicht, und
- einen zweiten Sensor (54), der in der Kammeranordnung angeordnet ist und konfiguriert ist, um zu erkennen, wenn der zweite Taucher (46) ein vorbestimmtes zweites Niveau (l₂) in der Kammeranordnung erreicht,
wobei die Probenentnahmevorrichtung (50) eine Steuervorrichtung (56) aufweist, die konfiguriert ist, um die Probe aus der Kammeranordnung zu entnehmen, wenn der erste Taucher (44) und der zweite Taucher (46) vorbestimmte Positionen in Bezug auf das erste Niveau (l₁) bzw. das zweite Niveau (l₂) einnehmen.

2. Trennvorrichtung (26) nach Anspruch 1, wobei der erste Sensor (52) und der zweite Sensor (54) magnetische Näherungssensoren (72) umfassen, die in oder an der Kammeranordnung angeordnet sind,
wobei die Magnetsensoren (72) entlang der Kammeranordnung beweglich sind, um jeweils das erste Niveau (l₁) und/oder das zweite Niveau (l₂) zu modifizieren.

3. Trennvorrichtung (26) nach Anspruch 1 oder 2, wobei die Kammeranordnung eine erste Kammer (40), die den Einlass (58) und einen Auslass (55) aufweist, und eine zweite Kammer (42), die einen Einlass (57) und den Auslass (59) aufweist, umfasst, wobei der Auslass (55) der ersten Kammer (40) fluidisch mit dem Einlass (56) der zweiten Kammer (42) verbunden ist.

4. Trennvorrichtung (26) nach Anspruch 3, wobei die Trennvorrichtung (26) eine Einspritzpumpe (48) umfasst, die angeordnet ist, um das Fluid durch die erste Kammer (40) und die zweite Kammer (42) zirkulieren zu lassen, wobei das Fluid mit einem Einspritzdruck von mehr als 6 bar und vorteilhafterweise zwischen 20 bar und 100 bar in Bezug auf den Atmosphärendruck unter Druck gesetzt wird.

5. Trennvorrichtung nach Anspruch 3 oder 4, wobei der Einlass (58) und der Auslass (55) der ersten Kammer (40) im Wesentlichen entlang einer vertikalen Richtung in Bezug auf die Schwerkraft ausgerichtet sind, und der Einlass (57) und der Auslass (59) der zweiten Kammer (42) im Wesentlichen entlang der vertikalen Richtung ausgerichtet sind.

6. Trennvorrichtung (26) nach einem der Ansprüche 3 bis 5, wobei der erste Taucher (44) konfiguriert ist, um den Auslass (55) der ersten Kammer (40) zu verschließen, wenn er das erste Niveau (l₁) erreicht, und der zweite Taucher (46) konfiguriert ist, um den Auslass (59) der zweiten Kammer (42) zu verschließen, wenn er das zweite Niveau (l₂) erreicht.

7. Trennvorrichtung (26) nach einem der Ansprüche 3 bis 6, wobei der Einlass (58) der ersten Kammer (40) mit einem Einlassventil (82) ausgestattet ist und/oder der Auslass (59) der zweiten Kammer mit einem Auslassventil (84) ausgestattet ist und/oder die Entnahmeöffnung (78) mit einem Probenentnahmeventil (86) ausgestattet ist,
das Einlassventil (82), das Auslassventil (84) und das Probenentnahmeventil (86) pneumatisch gesteuerte Ventile oder elektrische Sicherheitsventile sind.

8. Trennvorrichtung (26) nach einem der Ansprüche 1 bis 7, wobei die Trennvorrichtung (26) konfiguriert ist, um fluidisch mit einem Probenentnahmemodul (24) verbunden zu sein, wobei das Probenentnahmemodul (24) konfiguriert ist, um mindestens einen Teil jeder Phase (62, 66), die nicht die Phase von Interesse (64) ist, aus dem Fluid zu entfernen, das in die Trennvorrichtung (26) eintritt.

9. Trennvorrichtung (26) nach Anspruch 1 oder 2, wobei die Kammeranordnung eine einzige Kammer (40) umfasst, wobei der erste Taucher (44) und der zweite Taucher (46) beide in der Kammer (40) enthalten sind und angeordnet sind, um sich in der Kammer (40) zu bewegen, ohne sich gegenseitig zu behindern.

10. Anlage (10) zum Erzeugen eines Fluids, umfassend:
- ein Fluiderzeugungssystem (12, 14), das angeordnet ist, um ein Fluid aus einer Vielzahl von Quellen (A, B) zu erzeugen, das Fluid umfassend mindestens drei Phasen (62, 64, 66) einschließlich einer Phase von Interesse (64),
- eine Trennvorrichtung (26) nach einem der Ansprüche 1 bis 9, die konfiguriert ist, um Proben des Fluids aus dem Erzeugungssystem (12, 14) zu entnehmen, und
- ein Analysemodul (28), das mit der Probentrennvorrichtung (26) verbunden und konfiguriert ist, um die Fluidproben zu analysieren, um einen Anteil des aus jeder Quelle (A, B) extrahierten Fluids in jeder Probe abzuleiten.

11. Anlage (10) nach Anspruch 10, wobei die Anlage (10) ferner ein Probenentnahmemodul (24) umfasst, das fluidisch mit dem Fluidproduktionssystem (12) und der Trennvorrichtung (26) verbunden ist, wobei das Probenentnahmemodul (24) konfiguriert ist, um mindestens einen Teil jeder Phase (62, 66), die nicht die Phase von Interesse (64) ist, aus dem in die Trennvorrichtung (26) eintretenden Fluid zu entfernen.

12. Anlage (10) nach Anspruch 10 oder 11, wobei das Fluiderzeugungssystem (12, 14) ein Öl- und Gasproduktionsbohrloch (12) umfasst und die Vielzahl von Quellen (A, B) eine Vielzahl von Reservoiren ist, wobei das erzeugte Fluid eine Wasserphase (62), eine Gasphase (66) und eine Ölphase (64) umfasst, wobei die Ölphase (64) die Phase von Interesse ist.

13. Anlage (10) nach einem der Ansprüche 10 bis 12, wobei das Analysemodul (28) einen Gelpermeationschromatographen umfasst, der mit einem Ultraviolettlichtdetektor gekoppelt ist.

14. Verfahren zum Abtrennen mindestens einer Probe aus einem Fluidstrom, umfassend mindestens drei Phasen (62, 64, 66), einschließlich einer Phase von Interesse (64), von der eine Probe genommen werden soll, das Verfahren umfassend die folgenden Schritte:
(a) Bereitstellen einer Vorrichtung (26) nach einem der Ansprüche 1 bis 9;
(b) Füllen der Kammeranordnung mit Fluid aus dem Fluidstrom,
(c) wenn der erste Sensor (52) und der zweite Sensor (54) angeben, dass der erste Taucher (44) und der zweite Taucher (46) gleichzeitig die vorbestimmten Positionen in Bezug auf das erste Niveau l₁ bzw. das zweite Niveau l₂ einnehmen, Entnehmen des Fluids aus der Kammeranordnung mit der Probenentnahmevorrichtung (50), um eine Fluidprobe zu erlangen,
(d) wenn der erste Taucher (44) und/oder der zweite Taucher (46) ihre jeweiligen vorbestimmten Positionen nicht einnehmen, Spülen des Fluids aus der Kammeranordnung, und
(e) Wiederholen von Schritte (b) bis (d), bis eine ausreichende Anzahl von Proben extrahiert worden ist.

15. Verfahren nach Anspruch 14, wobei die Kammeranordnung eine erste Kammer (40), die den ersten Taucher (44) enthält, und eine zweite Kammer (42), die den zweiten Taucher (46) enthält, umfasst, wobei das Verfahren ein Abdichten des Auslasses (55) der ersten Kammer (40) durch den ersten Taucher (44) umfasst, wenn der erste Taucher (44) das erste Niveau (l₁) erreicht, und das Verfahren das Abdichten des Auslasses (59) der zweiten Kammer (42) durch den zweiten Taucher (46) umfasst, wenn der zweite Taucher (46) das zweite Niveau (l₂) erreicht.

16. Verfahren nach Anspruch 14, wobei die Kammeranordnung eine einzige Kammer (40) umfasst, die sowohl den ersten Taucher (44) als auch den zweiten Taucher (46) enthält, wobei sich der erste Taucher (44) und der zweite Taucher (46) getrennt in der Kammer (40) bewegen, ohne sich gegenseitig zu behindern.

## Revendications

1. Dispositif de séparation (26) pour extraire au moins un échantillon d'un écoulement de fluide comprenant au moins deux phases, de préférence trois phases (62, 64, 66), comprenant au moins une phase d'intérêt (64) à échantillonner, le dispositif de séparation (26) comprenant :
- un ensemble chambre ayant une entrée (58) et une sortie (59),
- un dispositif d'extraction d'échantillon (50) comprenant un orifice d'extraction (78) s'ouvrant dans l'ensemble chambre,
- un premier plongeur (44) et un second plongeur (46), respectivement situés dans l'ensemble chambre et ayant respectivement une première masse volumique et une seconde masse volumique, la première masse volumique étant supérieure ou égale à la masse volumique de la phase d'intérêt (64) et la seconde masse volumique étant inférieure ou égale à la masse volumique de la phase d'intérêt (64),
- un premier capteur (52) agencé dans l'ensemble chambre, configuré pour détecter le premier plongeur (44) atteignant un premier niveau ( l₁) prédéterminé dans l'ensemble chambre, et
- un second capteur (54) agencé dans l'ensemble chambre, configuré pour détecter le second plongeur (46) atteignant un second niveau (l₂) prédéterminé dans l'ensemble chambre,
le dispositif d'extraction d'échantillon (50) ayant un dispositif de commande (56) configuré pour extraire l'échantillon de l'ensemble chambre lorsque le premier plongeur (44) et le second plongeur (46) occupent des positions prédéterminées par rapport au premier niveau (l₁) et au second niveau (l₂) respectivement.

2. Dispositif de séparation (26) selon la revendication 1, dans lequel le premier capteur (52) et le second capteur (54) comprennent des capteurs de proximité magnétiques (72) agencés dans ou sur l'ensemble chambre,
les capteurs magnétiques (72) étant mobiles le long de l'ensemble chambre, de façon à modifier respectivement le premier niveau (l₁) et/ou le second niveau (l₂).

3. Dispositif de séparation (26) selon la revendication 1 ou 2, dans lequel l'ensemble chambre comprend une première chambre (40) ayant une entrée (58) et une sortie (55), et une seconde chambre (42) ayant une entrée (57) et la sortie (59), la sortie (55) de la première chambre (40) étant reliée de manière fluide à l'entrée (56) de la seconde chambre (42).

4. Dispositif de séparation (26) selon la revendication 3, dans lequel le dispositif de séparation (26) comprend une pompe d'injection (48) agencée pour faire circuler le fluide à travers la première chambre (40) et la deuxième chambre (42), le fluide étant pressurisé avec une pression d'injection supérieure à 6 bar et avantageusement comprise entre 20 bar et 100 bar par rapport à la pression atmosphérique.

5. Dispositif de séparation selon la revendication 3 ou 4, dans lequel l'entrée (58) et la sortie (55) de la première chambre (40) sont sensiblement alignées le long d'une direction verticale par rapport à la gravité, et l'entrée (57) et la sortie (59) de la seconde chambre (42) sont sensiblement alignées le long de la direction verticale.

6. Dispositif de séparation (26) selon l'une quelconque des revendications 3 à 5, dans lequel le premier plongeur (44) est configuré pour fermer hermétiquement la sortie (55) de la première chambre (40) lorsqu'il atteint le premier niveau (l₁), et le second plongeur (46) est configuré pour fermer hermétiquement la sortie (59) de la seconde chambre (42) lorsqu'il atteint le second niveau (l₂).

7. Dispositif de séparation (26) selon l'une quelconque des revendications 3 à 6, dans lequel l'entrée (58) de la première chambre (40) est équipée d'une vanne d'entrée (82) et/ou la sortie (59) de la seconde chambre est équipée d'une vanne de sortie (84) et/ou l'orifice d'extraction (78) est équipé d'une vanne d'échantillonnage (86),
la soupape d'entrée (82), la soupape de sortie (84) et la soupape d'échantillonnage (86) étant des soupapes à commande pneumatique ou des soupapes électriques de sécurité.

8. Dispositif de séparation (26) selon l'une quelconque des revendications 1 à 7, dans lequel le dispositif de séparation (26) est configuré pour être connecté de manière fluide à un module d'échantillonnage (24), le module d'échantillonnage (24) étant configuré pour éliminer au moins une partie de chaque phase (62, 66) autre que la phase d'intérêt (64) du fluide entrant dans le dispositif de séparation (26).

9. Dispositif de séparation (26) selon la revendication 1 ou 2, dans lequel l'ensemble chambre comprend une seule chambre (40), le premier plongeur (44) et le second plongeur (46) étant tous deux contenus dans la chambre (40) et étant agencés pour se déplacer dans la chambre (40) sans interférer l'un avec l'autre.

10. installation (10) pour la production d'un fluide, comprenant :
- un système de production de fluide (12, 14), agencé pour produire un fluide à partir d'une pluralité de sources (A, B), le fluide comprenant au moins trois phases (62, 64, 66) dont une phase d'intérêt (64),
- un dispositif de séparation (26) selon l'une quelconque des revendications 1 à 9, configuré pour extraire des échantillons du fluide à partir du système de production (12, 14), et
- un module d'analyse (28) connecté au dispositif de séparation des échantillons (26) et configuré pour analyser les échantillons de fluide afin de déduire une proportion de fluide extrait de chaque source (A, B) dans chaque échantillon.

11. Installation (10) selon la revendication 10, dans laquelle l'installation (10) comprend en outre un module d'échantillonnage (24) relié de manière fluide au système de production de fluide (12) et au dispositif de séparation (26), le module d'échantillonnage (24) étant configuré pour éliminer au moins une partie de chaque phase (62, 66) autre que la phase d'intérêt (64) du fluide entrant dans le dispositif de séparation (26).

12. Installation (10) selon la revendication 10 ou 11, dans laquelle le système de production de fluide (12, 14) comprend un puits de production de pétrole et de gaz (12) et la pluralité de sources (A, B) est une pluralité de réservoirs, le fluide produit comprenant une phase aqueuse (62), une phase gazeuse (66) et une phase pétrolière (64), la phase pétrolière (64) étant la phase d'intérêt.

13. Installation (10) selon l'une quelconque des revendications 10 à 12, dans laquelle le module d'analyse (28) comprend un chromatographe à perméation sur gel couplé à un détecteur de lumière ultraviolette.

14. Procédé de séparation d'au moins un échantillon à partir d'un écoulement de fluide comprenant au moins trois phases (62, 64, 66) dont une phase d'intérêt (64) à échantillonner, le procédé comprenant les étapes suivantes :
(a) fournir un dispositif de séparation (26) selon l'une quelconque des revendications 1 à 9,
(b) remplir l'ensemble chambre avec du fluide provenant de l'écoulement de fluide,
(c) lorsque le premier capteur (52) et le second capteur (54) indiquent que le premier plongeur (44) et le second plongeur (46) occupent simultanément les positions prédéterminées par rapport au premier niveau l₁ et au second niveau l₂ respectivement, extraire le fluide de l'ensemble chambre à l'aide du dispositif d'extraction d'échantillon (50), afin d'obtenir un échantillon de fluide,
(d) lorsque le premier plongeur (44) et/ou le second plongeur (46) n'occupent pas leurs positions prédéterminées respectives, purger le fluide de l'ensemble chambre, et
(e) répéter les étapes (b) à (d) jusqu'à ce qu'un nombre suffisant d'échantillons ait été extrait.

15. Procédé selon la revendication 14, dans lequel l'ensemble chambres comprend une première chambre (40) contenant le premier plongeur (44) et une seconde chambre (42) contenant le second plongeur (46), le procédé comprenant la fermeture hermétique de la sortie (55) de la première chambre (40) par le premier plongeur (44) lorsque le premier plongeur (44) atteint le premier niveau (l₁) et le procédé comprenant la fermeture hermétique de la sortie (59) de la seconde chambre (42) par le second plongeur (46) lorsque le second plongeur (46) atteint le second niveau (l₂).

16. Procédé selon la revendication 14, dans lequel l'ensemble chambre comprend une seule chambre (40) contenant à la fois le premier plongeur (44) et le second plongeur (46), le premier plongeur (44) et le second plongeur (46) se déplaçant séparément dans la chambre (40) sans interférer l'un avec l'autre.
